# EUROPEAN PATENT APPLICATION

(11) **EP 1 529 820 A1**
(43) Date of publication of application: **11.05.2005**
(21) Application number: 03078451.6
(22) Date of filing: 31.10.2003
(51) Int. Cl.: C09D 7/00, C09D 103/10, C09J 103/10, C08L 3/10, D21H 19/54

(54) **Biopolymer-based binders**

(71) Applicant: Nederlandse Organisatie voor Toegepast-Natuurwetenschappelijk Onderzoek TNO, 2628 VK Delft (NL)
(72) Inventor: Slaghek, Theodoor Maximiliaan, 3042 HT Rotterdam (NL)
(74) Representative: Prins, Adrianus Willem, Mr. Ir.

(57) **Abstract**

The invention provides the use of carbohydrates carrying aldehyde and/or carboxyl groups, as binders, thickeners, and rheology modifiers in e.g. coatings (such as primers, paints, lacquers and varnishes), inks and adhesives. The oxidised carbohydrates are especially starch-like polymers having relatively high degrees of substitution for carboxyl groups and additionally contain aldehyde groups. They are present in concentrated solutions. Typically they are chemically crosslinked.

## Description

The present invention pertains to the use of biopolymer derivatives as binders, thickeners or rheology modifiers. These biopolymer derivatives can be used for various purposes including coatings (e.g. primers, paints, lacquers, varnishes and the like), adhesives, inks, etc

Binders for water-borne coatings are currently based on acrylates. Although the performance of acrylates is usually satisfactory, its dependence on non-annually renewable crude oil sources is a drawback. Thus, there is a need for water-borne binders and thickeners based on renewable and inexpensive raw materials.

It was found according to the invention that modified macromolecular carbohydrates such as starch at a relatively high degree of oxidation can be used in coating compositions having a high dry matter content and having excellent binding and film-forming properties. These compositions, if necessary after cross-linking, are resistant to water and resistant to microbial degradation, and can be produced in a cost-effective manner.

Thus, the invention pertains to the use of a modified carbohydrate having a molecular weight of a least 100,000 D and having a degree of substitution for carboxyl and/or aldehyde groups of at least 5%, preferably up to 100%, more preferably between 10 and 70 %, most preferably between 15 and 60% as a binder for coating compositions. The invention also concerns coating compositions comprising an aqueous solution of 15-70 wt.% of a such carboxylated (and/or aldehyde-containing) carbohydrate having a molecular weight of a least 100,000 D.

The carbohydrate can be any modified carbohydrate that is partly or fully soluble in water. Water-soluble compounds are understood herein to comprise compounds that can be dissolved in water at a minimum level of 15% by weight, if necessary after heating or thorough mixing. Suitable examples include glucans, especially α-glucans, in which the anhydroglucose units are linked through 1,3-, 1,4- and/or 1,6-linkages. These include starch, starch components or starch variants such as native starch from any biological source including potato, manioc, tapioca, wheat, maize, rice, banana, quinoa and the like, as well as from genetically modified plants and microorganisms, and starch fractions, amylose, amylopectin, high-amylose starch etc. These also include other branched and non-branched 1,3-, 1,4- and 1,6-glucans, whether from plant or from microbial origin, such as those described in US 6,486,314 (= WO 01/903721), US 6,465,203 and WO 03/008618. Other oxidised carbohydrates having the required molecular weight and solubility, such as glucomannans, galactomannans, xyloglucans etc. can also be used.

The modified carbohydrates generally include carbohydrates that contain carboxyl groups or aldehyde groups or both having a total degree of substitution (DS) of at least 5%, i.e. at least 5 carboxyl groups and/or aldehyde groups being present on 100 anhydroglycose units (AGU) of the carbohydrate. The preferred maximum is 100% substitution, although higher degrees of substitution (the average anhydroglycose units carrying more than one groups selected from carboxyl and aldehyde) are not excluded. However it is preferred that the carbohydrates are carboxylated carbohydrates, i.e. contain at least carboxyl groups. The DS for carboxyl groups is especially 5-100%, preferably 10-70%, more preferably 15-60%.

Carbohydrate compositions in which both aldehyde and carboxyl groups are present are most preferred. The carboxyl groups favour water-solubility, while the aldehyde groups introduce functionality, especially cross-linking functionality. It is especially preferred that aldehyde groups are present to at least 0.5%. The preferred DS for aldehydes is up to 20%, especially 1-10%.

It is preferred that the aldehyde groups and most, or all of the carboxyl groups are present as the result of oxidation of the carbohydrate. This means that the carbon atoms of the aldehyde and carboxyl groups were already part of the original carbohydrate. The presence of carboxyl groups and aldehyde groups can also be expressed by the degree of oxidation. The degree of oxidation (in %) as used herein means the number of anhydroglycose units oxidised to units carrying aldehyde and/or carboxyl groups per 100 anhydroglycose unit. As an example, a degree of oxidation of 50 for dialdehyde starch means that 50 out of 100 AGU have been oxidised to C2-C3 ring-opened dialdehyde groups; for C6-oxidised starch, a degree of oxidation of 50 means that 50 out of 100 AGU have been oxidised to units carrying C6-aldehyde (glucuraldehyde) or C6-carboxyl (glucuronic acid) groups.

In addition to aldehyde and carboxyl groups, other functional groups, e.g. ammonium groups, hydroxyalkyl groups, carboxyalkyl groups, phosphate groups, sulphate groups, may be present in the carbohydrate. Carboxyalkyl groups, in particular carboxymethyl groups, may account for part or all of the carboxyl groups present. Carboxymethyl groups are obtainable by reaction of the carbohydrate with chloroacetate as commonly known. However, it is preferred that at least 50%, more preferably at least 90% of the required carboxyl groups are present as a result of oxidation, i.e. the carbon atom of the carboxyl groups originating from the carbohydrate itself.

In addition to functionalities being present in the same molecule type, the modified carbohydrates may also be a mixture of carbohydrates, each component of which can have all the required functionalities, or the functionalities can be divided among the components. For example, a mixture of C6-carboxy starch and dialdehyde starch can be used, when the average degree of oxidation is as defined above.

The oxidation of the carbohydrates can be achieved in a manner known per se. The oxidation should, however, proceed in such a manner that chain degradation is minimised, in order to obtain oxidised products of sufficient chain length (molecular weight). As a suitable example of non-degrading oxidation, aldehyde groups can be introduced by the well-known periodate oxidation, resulting in C2-C3-dihydroxy-ethylene groups being oxidised to dialdehyde groups with ring opening of the oxidised anhydroglycose unit (see. e.g. WO 95/12619). Part of the aldehyde groups thus obtained can be further oxidised to carboxyl groups e.g. by peracid oxidation (see e.g. WO 00/26257).

A different route towards aldehyde and carboxyl functionalisation of carbohydrates consists of oxidation of primary hydroxyl groups (C6 in the starch AGU's). This oxidation is preferably performed with nitroxyl (TEMPO) mediation using various oxidising agents such as hypohalite or peracids or oxygen enzyme-catalysed or metal-catalysed oxidations. These oxidations are disclosed inter alia in NL9301172, US 3,364,200, WO 95/07303, WO 00/50462, WO 00/50463, WO 01/34657 and WO 01/00681. These oxidations result in the presence of both aldehyde groups and carboxyl groups, the relative amounts of which can be controlled by controlling the reaction conditions or the particular TEMPO derivative. Generally, the ratio of aldehyde to carboxyl ranges from roughly 1:1 at the early stages of oxidation (degree of oxidation up to, say, 20%) to around 0.5 percent aldehyde at full (100%) oxidation; this result is suitable for the purpose of the invention. If no C6-aldehyde groups are desired, any aldehyde groups can be reduced to hydroxymethyl groups, e.g. using borohydride, or oxidised to carboxyl groups, e.g. using chlorite and/or other oxidants.

The oxidation is preferably carried out in a homogeneous medium, wherein a homogeneous medium may be a clear solution or a fine dispersion as in the case of dialdehyde starch. Thus, in case of C6 oxidation of starch, the oxidation is preferably executed after dissolution, including gelatinisation, of the starch granules. The oxidised carbohydrate can be isolated by precipitation and/or filtration, or the oxidation medium can be purified and the resulting oxidised carbohydrate solution used as such, or after further dilution or concentration.

The molecular weight of the oxidised carbohydrate should be at least about 100,000 D (corresponding to a degree of polymerisation, DP, of about 600). More preferably, the molecular weight is above 200,000 D, especially between 400,000 and 1,200,000 D (DP from about 2500 to about 7500).

The concentration of the oxidised carbohydrates in the final compositions to be used (coatings, inks, etc.) is between 15 and 70% by weight. Products largely based on dialdehyde carbohydrates, such as dialdehyde starch (DAS), i.e. in which at least 75% of the oxidised groups are 2,3-dialdehyde groups, have a preferred concentration between 15 and 40% by weight; products largely based on C6-oxidation; i.e. at least 75% of the oxidised groups being C6-aldehyde or C6-carboxy groups, have a preferred concentration between 30 and 70% by weight; other products have a preferred concentration between 20 and 50% by weight.

The solutions or dispersions of the oxidised carbohydrates are produced by simply adding the required amount of water to the dry matter and mixing, for example in the case of C6-oxidised products. Products that are more difficult to dissolve, such as DAS, are added to warm water in small portions, which initially results in an increased viscosity, which gradually decreases again, to give the desired solution. Alternatively, the desired solution can be obtained directly in a continuous process, e.g. in an extruder.

In a preferred embodiment of the invention, the modified carbohydrates are crosslinked before, during or after application for curing the composition. Crosslinkers to be used according to the invention include isocyanates, epoxides and water-soluble reagents, such as complex forming agents like zinc and zirconium ions, (poly)carbodi-imides, (poly)oxazolines, (poly)aziridines, (poly)hydrazides and (poly)amines. The concentrations of these crosslinkers can vary from 0.1 to 20%, more preferably from 0.5 to 10 %, most preferably from 1 to 7 % based on dry weight. The crosslinkers can be added after preparation of the carbohydrate (starch) solution. Some crosslinkers such as isocyanates and epoxides become effective at high temperatures. Others systems including e.g. polycarbodiimides, polyhydrazides and polyoxazolines can be cured by lowering the pH of the dying composition to values below pH 6. At high pH, these crosslinkers will not be very active and thus a longer pot-life can be achieved. Lowering of the pH can be achieved by the use of a volatile amine, such as ammonia or triethylamine, that evaporates during drying and thus induces curing of the coating.

The concentrated solutions thus obtained can be used as binders in coatings (such as primers, paints, varnishes, lacquers, anti-graffiti coatings, and the like), adhesives, inks, or as thickeners (temporary or permanent thickeners), processing agents, rheology modifiers, e.g. temporarily increasing viscosity, sizing agents, in coatings, adhesives and inks for paper, cardboard, wood, walls and wallpaper applications and the like. The oxidised carbohydrate solutions can be used alone or in combination with other components having the same or other functions, such as plasticisers, tackifiers, crosslinkers, pigments, fillers, surface active agents and stabilisers. The properties of the oxidised carbohydrates in dissolved or dry form can be adjusted by varying the oxidation process, the degree of oxidation and the molecular weight. In addition, further additives such as plasticisers can modify the performance. Plasticisers, such as polyols and urea, may be present at a level of e.g. 0-60%, especially 10-40% with respect to the modified carbohydrate. The rheological properties of the solutions can be adjusted by the presence of additives. The solutions of the oxidised starch exhibit an almost perfect Newtonian behaviour, and have a low viscosity, even at high dry substance levels.

Films of the modified carbohydrate can be obtained by applying the modified carbohydrate solution to a substrate by means of casting, painting or spraying. The drying time for such carbohydrate films typically ranges between 1 and 2 hours. The drying time can be increased by e.g. the addition of a volatile alcohol, such as methanol or ethanol. If desired, the coatings can be crosslinked by means of a water-soluble crosslinker. When a water-soluble crosslinker is used, the first part of the film formation is similar to the non-crosslinked system. In the latter part of the film formation, the amount of water in the coating is lowered and/or the pH of the coating is lowered by means of an evaporating base, and a homogeneous transparent crosslinked film is obtained. In the case of a two-component system, the crosslinker is mixed with the carbohydrate solution and cast, sprayed or painted immediately. The crosslinking reaction starts immediately and/or is accelerated by means of a temperature rise.

The mechanical properties of films obtained using the coatings vary from very hard (hardness 200 MPa, E-modulus 8 MPa) to very rubbery (hardness 10 MPa, E-modulus 0.1 GPa) with increasing level of plasticiser. The oxygen barrier properties are excellent (< 0.3 cm³.mm/atm/day/m²). The adhesive properties are good: adhesive strength > 6 MPa.

### Example 1: C6-Carboxy Starch

Potato starch (1.28 mol) was gelatinised and 1 gram NaBr (0.01 mol) and TEMPO (0.006 mol) were added. The solution was cooled in an ice-bath and a solution of hypochlorite was brought to pH 10. The reaction was started by adding the hypochlorite solution (0.383 mol). The temperature was below 5°C during the reaction and the pH was maintained at 10 by adding 2M NaOH through automatic titration. When the reaction was finished, excess hypochlorite was quenched with ethanol and the pH was brought to 8 by adding 4M HCl. The unreacted aldehydes were reduced with sodium borohydride. The solution was brought to pH 3 with 4M HCl in order to remove borate-carbohydrate complexes. The solution was subsequently brought to pH 5 and the product was desalted and freeze-dried. Analysis shows that 32 % of the primary alcohols were converted to carboxyl groups. After drying, the moisture content was 3.6 %. The average molecular weight of the modified starch was around 400 kD.
*Preparation of binder:* 7.09 g of the modified starch was mixed with 8.42 g water. After thorough mixing at room temperature, a starch solution was obtained having a solid content of 45 wt.% and a viscosity of 2-3 Pas. Adding sorbitol as a plasticiser (up to 36 parts per hundred parts of starch, pph) increased the solid content of the solution to 58 wt.%. The starch solution was cast on a glass plate and dried at room temperature overnight to obtain a transparent film of ca. 45 µm. The hardness of this film was measured using a Fischerscope H100C by Fischer and has a value between 120 and 150 MPa at 23 °C and 50% RH for plasticiser contents between 0 and 30 pph. The E-modulus ranged between 3 and 5 GPa at 23 °C and 50% RH for plasticiser contents between 0 and 30 pph. The oxygen permeability of a film having 30 pph sorbitol is 0.3 cm³.mm/atm/day/m² at 23 °C and 50% RH. Without the use of a crosslinker, the film dissolved completely after immersion in water. When a crosslinker (e.g. an isocyanate) is mixed with the modified starch, the film did not dissolve anymore, but only swelled after immersion in water.

### Example 2: DiAldehyde Starch (DAS)

Potato starch (6.17 mol) was dispersed in 6 liter water. The pH was brought to 4 by adding 100% acetic acid and cooled to 4°C. Sodium meta-periodate (1.23 mol) was dissolved in 2 liter water and added to the starch solution. The mixture was left overnight at 4°C while stirring. Iodate was removed by washing the mixture with water. Finally the mixture was filtered through a P3-filter. Analysis shows that 20% of the anhydroglucose units were transformed to dialdehyde functionalities.
*Preparation of binder:* A solution was made of the dialdehyde starch having 20 % dialdehyde groups in water. 15 g of the modified starch was mixed thoroughly with 60 ml warm water (ca 70 °C) and a strong gel was formed. After some time the gel collapsed and a liquid solution was obtained, having a solid content of ca. 20 wt.%. 15 g of this solution was mixed with 0.75 g of glycerol. The pH of the solution was 4 - 4.5. Diethylenetriamine (4 wt.% on dry starch base) was added to the solution and a gel was formed immediately. When the pH of the starch solution was 9, no gel formation was observed after addition of the diethylenetriamine. Using a volatile amine, such as triethylamine ensured that the pH of the solution decreased after film casting, which results in crosslinking of the dried film. A crosslinked film has a lower water, ethanol and oxygen permeability than a non crosslinked film. Furthermore, the film is more resistant to water.

### Example 3: MonoAldehyde Carboxy Starch (MACS)

Dialdehyde starch (example 2, 5.52 mol) was homogenised in water and 25 g NaBr (0.24 mol) was added. Peracetic acid (1.10 mol) was added in 10 doses. The temperature was below 10°C during the reaction and the pH was maintained at 5 by adding 2M NaOH through automatic titration. After completion of the reaction, the oxidised starch was allowed to precipitate, after which the supernatant was removed. Methanol was added to the precipitate, followed by filtration through a P2-filter. The product was air-dried. The resulting monoaldehyde-carboxy starch has 10% aldehyde groups and 7.5 % carboxyl groups. The moisture content after drying was 20.5%.
*Preparation of binder:* 25 g of this modified starch was mixed was 70 g warm water (ca 70 °C) in batches of 5 g to obtain a homogeneous solution of ca 25 wt.% solid content. Stirring the solution for a longer time could result in a higher solubility of the modified starch (up to 40 wt.%). Casting a film on wood resulted in a transparent, but brittle film. Using 25 pph of the plasticiser glycerol reduced the brittleness of the coating. To 15g of the modified starch / glycerol solution 30 µl triethylamine was added to increase the pH to 7.0. Next, 2 g (8 wt.%) of adipic dihydrazide (ADH) was added (= 4 wt.% on dry starch base). A homogeneous solution is obtained. After casting a film from the solution, the triethylamine evaporates and the pH of the solution/gel decreases below 6. At this point the ADH reacts with the aldehyde groups to form a crosslinked material. When placed in 100 % RH at 23 °C this film absorbs ca 37% water in comparison to 71 % of the non-crosslinked material. The water and ethanol permeability both decrease significantly upon crosslinking (water permeability: from 65 to 32 g.mm/day/m² and ethanol permeability: from 34 to 7.6 g.mm/day/m²). Furthermore, crosslinking increases the mechanical properties E-modulus and tensile strength by a factor of 10.

### Example 4: Carboxyl and aldehyde groups at the C6 position

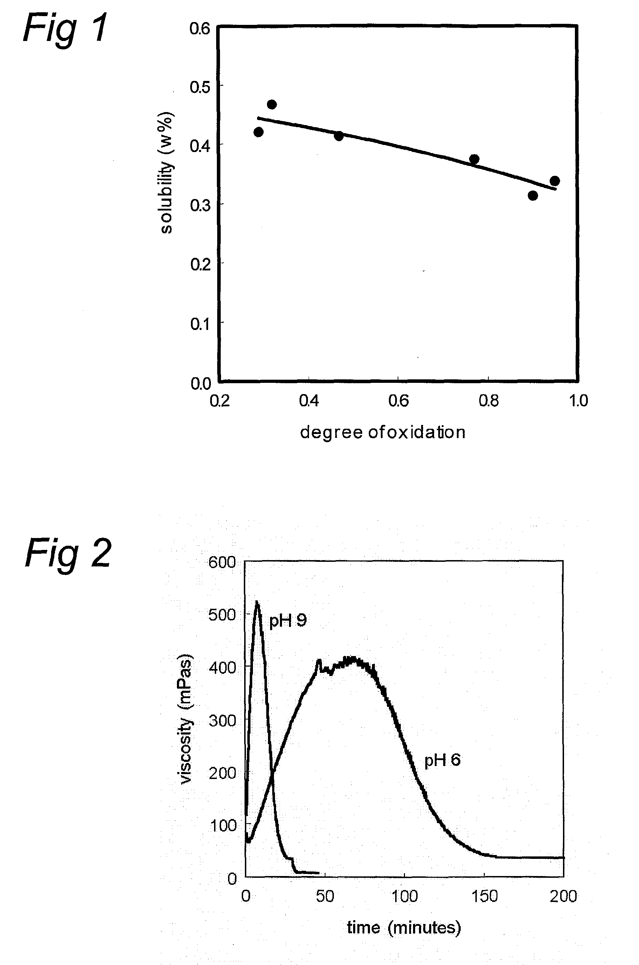

Native potato starch was oxidised according to example 1. After oxidation the modified starch was not reduced with sodium borohydride. This results in a starch having 46 % carboxyl groups at the C6 position and a small amount of aldehyde groups at the C6 position. The average molecular weight of the resulting starch is 700 kD. After adding the modified starch to water, a strong gel is formed. After some time this gel collapses into a low viscous liquid. The time until this low viscous liquid is formed depends on the pH of the solution. At pH 6 it takes 150 minutes and at pH 9 it takes 30 minutes as can be seen in figure 2. The maximum solubility of the modified starch in water is 27 wt.%. The modified starch can be crosslinked using e.g. adipic dihydrazide, Jeffamine, diethyl triamine, etc. When crosslinking with ADH, the time to gelation depends on the pH. At pH 6, the solution turns immediately into a gel and at pH 11 it takes 10 hours before gel formation occurs.

### Example 5: Combination of carboxyl groups at the C6 position and dialdehyde groups

The solubility of the DAS20 material of example 2 (about 15 wt.%) was increased by prior introduction of carboxyl groups at the C6 position. First the native potato starch was oxidised according to example 1 and subsequently oxidised according to example 2. This yielded three materials having a degree of oxidation of 20 % aldehyde groups and 0, 29 and 47 %, respectively, carboxyl groups at the C6 position. The solubility of these materials is listed in table 1. The solubility of the modified starch increases with increasing amount of carboxyl groups on the C6 position. The modified starches can be crosslinked using e.g. adipic dihydrazide, Jeffamine, diethylenetriamine, etc.

**Table 1:**

| Solubility of the modified starches | | | | |
|---|---|---|---|---|
| Example 5 | | Example 6 | | Solubility |
| C6-ox | C2/C3-ox | C6-ox | C2/C3-ox | |
| 0% | 20% | | | 15 wt.% |
| 29% | 20% | | | 19 wt.% |
| 47 % | 20 % | | | 23 wt.% |
| | | 29 % | 20 % | 19 wt.% |
| | | 29 % | 5 % | 28 wt.% |
| | | 29 % | 0 % | 42 wt.% |

### Example 6: Combination of carboxyl groups at the C6 position and dialdehyde groups

The solubility of the 29 % C6-oxidised and 20% C2/C3 oxidised material of example 5 (19 wt.%) was increased by reducing the level of C2/C3 oxidation. First the native potato starch was oxidised according to example 1 and subsequently oxidised according to example 2. This yielded three materials having 0, 5 and 20 % aldehyde groups and 29% carboxyl groups in the C6 position. The solubility of these materials is listed in table 1. The solubility of the modified starch increases with decreasing amount of dialdehyde groups. The aldehyde modified starches can be crosslinked using e.g. adipic dihydrazide, Jeffamine, diethylenetriamine, etc.

### Example 7: Degree of oxidation and solubility

Native potato starch is modified according to example 1 and degrees of C6 oxidation between 20 and 99 wt.% are obtained. The solubility (in g/g) of these modified starches depends on the degree of oxidation. In figure 1, this dependence is shown for modified starches having average molecular weights between 400 and 700 kD.

### Example 8: Adhesion strength to wood and paper

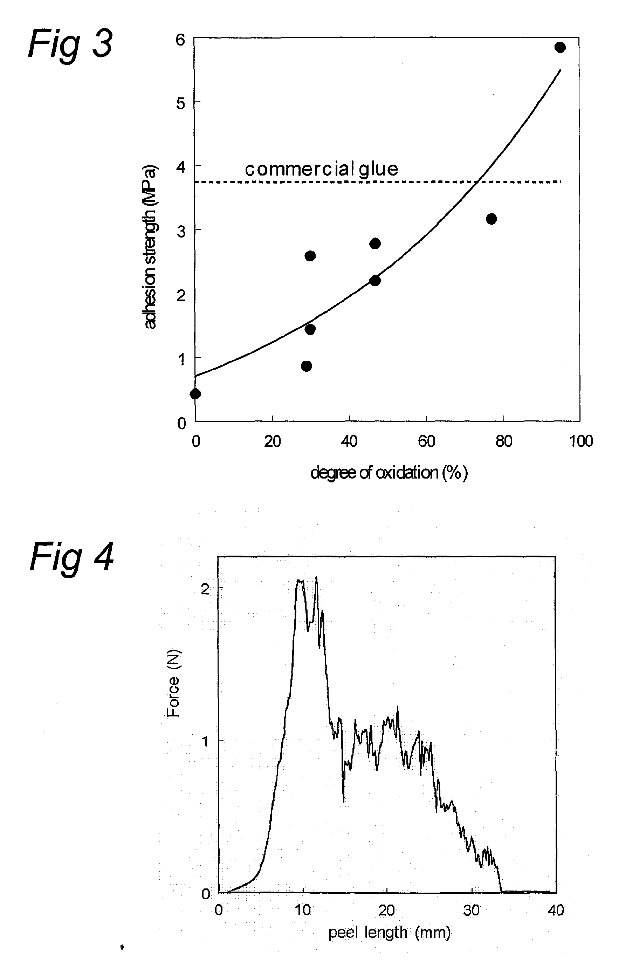

Native potato starch is modified according to example 1 and degrees of C6 oxidation between 20 and 99 wt.% are obtained. These starches can be used as adhesives or glues for paper, wood etc. As an example, the C6-oxidised starches as described in example 1 are used to connect two pieces of wood. The adhesion strength of these C6-oxidised starches depends on the degree of oxidation. In figure 3, this dependence is shown for modified starches having average molecular weights between 400 and 700 kD. The highly oxidised starches have a better performance than a commercial glue.
Two pieces of paper were attached to each other using a thin layer of the oxidised starch solution. The system was dried at 23 C and 50 % RH for at least two days and a T-peel test according to standard NEN-EN 1895 was performed. The test specimens were 1.0 cm wide and a grip separation of 10 mm/min was applied. A typical example for such a test is given in figure 4. The force reaches a high value in the beginning, when both the paper and the starch adhesive are loaded. After this initial peak the force decreases because the paper starts to tear. The plateau between 15 and 25 mm is the force needed for tearing the paper. This experiment was conducted using two oxidised starches, viz, C6 oxidised (example 1, 90 % oxidation) and monoaldehyde carboxy starch (example 3, 20 % oxidation). The values for the peel forces in N/cm of the plateau are listed in table 2. Also some experiments are included of the attached papers after immersion in water for 3 hours. It can be seen that in all cases the paper is tearing and not the starch adhesive.

**Table 2:**

| T-peel forces of nine samples | | | | |
|---|---|---|---|---|
| way of oxidation | degree of oxidation | Conditioned | Mean force (N/cm) | Remarks |
| C6 carboxy starch | 90 % | 23°C, 50% RH | 0.971 | Paper is tearing |
| C6 carboxy starch | 90 % | 23 °C, 50% RH | 1.043 | Paper is tearing |
| C6 carboxy starch | 30 % | 23 °C, 50% RH | 0.998 | Paper is tearing |
| C6 carboxy starch | 30 % | 23 °C, 50% RH | 0.996 | Paper is tearing |
| MACS * | 20 % | 23 °C, 50% RH | 1.039 | Paper is tearing |
| MACS * | 20 % | 23 °C, 50% RH | 0.989 | Paper is tearing |
| C6 carboxy starch | 90 % | immersed in water | 0.101 | Paper is tearing |
| C6 carboxy starch, crosslinked with polyamine | 90 % | immersed in water | 0.127 | Paper is tearing |
| MACS * | 20 % | immersed in water | 0.052 | Paper is tearing |

| | | | | |
|---|---|---|---|---|
| * MACS: MonoAldehyde Carboxy Starch | | | | |

### Example 9: Properties of the (crosslinked) films

The oxidised starches as described in examples 1, 2, 3 and 4 are made into a solution having 20-40 % of carbohydrate by weight. Glycerol was added to the solution (0-43 parts per hundred parts of oxidised starch) and mixed thoroughly. The solutions were cast into films having thicknesses between 50 and 100 µm by casting the carbohydrate solution on a glass plate. The films were dried at 23 °C and 50% relative humidity for two days. After this time the tensile properties were measured using a homebuilt (TNO) tensile tester, with a speed of 1 mm/min. Furthermore, the water permeability of the film (at 23 °C, measured between 50 and 100 % RH, according to ISO 7783-1) and water uptake after immersion in water at 23 °C are measured. The values of these measurements are listed in table 3.
It can be seen that the when a coating of an oxidised starch is crosslinked, both the mechanical properties as well as the water behaviour are improved. Comparing the properties to values of commercial materials like LDPE, EVOH and acrylate, it can be seen that the mechanical properties can be made comparable by an adjustment of the amount of plasticiser and/or crosslinker.

**Table 3:**

| Mechanical properties and water behaviour of some (crosslinked) films of the oxidised starches. | | | | | | | | |
|---|---|---|---|---|---|---|---|---|
| way of oxidation | degree of oxidation | amount of glycerol | crosslinker | E-modulus (GPa) | tensile strength (Mpa) | elongation at break (%) | water permeability g.mm/m²/day | water uptake after immersion |
| C6 carboxy starch | 94 % | 0 pph | - | 2.3 | 45 | 7.6 | 32 | dissolves |
| C6 carboxy starch | 94 % | 25 pph | - | 0.97 | 3.7 | 0.67 | 52 | dissolves |
| C6 carboxy starch | 94 % | 43 pph | - | 0.001 | 0.04 | 760 | 75 | dissolves |
| C6 carboxy starch | 94 % | 16 pph | 27 pph polyamine | 3.5 | 25 | 0.77 | 16 | 54 % |
| C6 carboxy starch | 94 % | 25 pph | 25 pph carbodiimide | 1.15 | 6.6 | 0.95 | 45 | 81 % |
| DAS * | 20% | 25 pph | - | 1.3 | 21 | 1.8 | 52 | dissolves |
| DAS * | 20% | 25 pph | 5 pph ADH ** | 1.3 | 27 | 2.3 | 33 | 61 % |
| MACS * | 20% | 25 pph | - | 0.02 | 0.6 | 25 | 65 | dissolves |
| MACS * | 20% | 25 pph | 4 pph ADH | 0.2 | 5.2 | 26 | 32 | 72 % |
| MACS * | 50% | 24 pph | - | 1.5 | 22 | 1.7 | 61 | dissolves |
| C6 aldehyde starch | 50% | 24 pph | 4 pph ADH | 1.7 | 28 | 2.6 | 58 | 81 % |
| | | | | | | | | |
| LDPE | | | | 0.21 | 13 | 500 | 0.5 | 0.01 % |
| EVOH | | | | 2.4 | 40 | 240 | 3 | 9 % |
| acrylate | | | | 0.047 | 2.8 | 97 | 22 | 32 % |

| | | | | | | | | |
|---|---|---|---|---|---|---|---|---|
| * DAS: DiAldehyde Starch; MACS: MonoAldehyde Carboxy Starch | | | | | | | | |
| ** ADH: adipid acid dihydrazide | | | | | | | | |

### Example 10: Paper applications

### Some of the oxidised starches have been used in paper applications.

A coating of several microns of a C6 carboxy starch (30 % oxidation) was applied to a piece of printing paper. This piece of paper was printed using a laser printer. Careful examination of the printed text showed that the characters printed on the coated paper were shaper than the characters printed on the non-coated paper. However, when the paper was immersed in water, the printed text on the coated area was very easily removed, whereas the text on the non-coated area could not be removed. Thus the coating can be used for thermorary purposes such as anti-grafitti or for a better recycling of printed paper.
A piece of cardboard was coated with a C6-oxidised starch crosslinked with a polyamine crosslinker. The surface of the cardboard became smooth and glossy. Furthermore, the water sensitivity of the cardboard is significantly improved. The droplet of water that was placed on the non-coated surface penetrates very fast into the cardboard and a dark stain is formed. On the other hand a droplet placed on the coated cardboard surface remains a droplet and no indication of water penetration into the cardboard could be observed.
Pieces of paper were coated with several oxidised starches and the oxygen barriere was measured at 23 °C and 50 % RH. Values for the oxygen permeability of these coatings and some commercial materials are listed in table 4.

**Table 4:**

| Oxygen permeability of some oxidised starches at 23 °C and 50 % RH. | | | | |
|---|---|---|---|---|
| way of oxidation | degree of oxidation | amount of glycerol | crosslinker | oxygen permeability (cm³.mm/atm/day/m²) |
| C6 carboxy starch | 94 % | 25 pph | - | 0.45 |
| C6 carboxy starch | 94 % | 16 pph | 27 pph polyamine | 0.27 |
| Dialdehyde starch | 20% | 25 pph | - | 0.15 |
| MonoAldehyde Carboxy Starch | 20% | 25 pph | - | 0.75 |
| MonoAldehyde Carboxy Starch | 20% | 25 pph | 4 pph ADH | 0.56 |
| C6 aldehyde starch | 50% | 24 pph | - | 0.49 |
| C6 aldehyde starch | 50% | 24 pph | 4 pph ADH | 0.16 |
| LDPE | | | | 150 |
| EVOH | | | | 0.4 |
| Acrylate latex | | | | 350 |

The oxygen permeability of the oxidised starches are very low and decreases even further upon crosslinking. The values are comparable to those of EVOH, which is commonly used as oxygen barrier in packaging. However the carbohydrate material can be applied as a coating.

### Example 11: Phase separation and solubility

Native potato starch is modified according to example 1 having a degree of oxidation of 94 % and an average molecular weight of 560 kD. In order to increase the solid content of this modified starch in water, the solution was phase-separated. This was achieved by dissolving this modified starch in water at a temperature of 60 °C. A solubility of at least 50 wt.% was reached. A small amount of ethanol was added (ca 4 wt.% based on the total weight) and mixed thoroughly. Next, the solution was cooled down while gently stirring. Upon cooling phase separation occurred and after cooling a milky white liquid was obtained having a solid content of 48 wt.% and a viscosity similar to that of a 43 wt.% homogeneous mixture of the same modified starch (2-3 Pas). When casting a film from this mixture, the dry rate was significantly faster than that of the homogeneous solution. A very transparent and hard film was obtained after drying.

## Claims

1. Use of a carboxylated carbohydrate having a molecular weight of a least 100,000 D and having a degree of carboxyl substitution of between 5 and 100% as a binder or a thickener or a rheology modifier in liquid coating compositions.

2. Use according to claim 1, wherein the degree of carboxyl substitution is between 10 and 70%, preferably between 15 and 60%.

3. Use according to claim 1 or 2, wherein at least 50% of the carboxyl groups are obtained by oxidation of hydroxyl groups of the carbohydrate.

4. Use according to any one of claims 1-3, wherein the carbohydrate additionally contains aldehyde groups obtained by oxidation of hydroxyl groups of the carbohydrate with a degree of aldehyde substitution between 0.5 and 20%, preferably between 1 and 10%.

5. Use according to any one of claims 1-4, wherein the carbohydrate comprises an α-1,3/1,6- or α-1,4/1,6-glucan.

6. Use according to any one of claims 1-5, wherein the oxidised carbohydrate comprises carboxyl and/or aldehyde groups obtained by oxidation of primary hydroxyl groups.

7. Use according to claim 1-6, wherein the oxidised carbohydrate comprises carboxyl and/or aldehyde groups obtained by oxidation of secondary hydroxyl groups.

8. Use according to any one of claims 1-7, wherein the carbohydrate is chemically cross-linked.

9. Use according to claim 8, wherein the carbohydrate is crosslinked with a dihydrazide.

10. Use according to any one of claims 1-9, wherein the liquid composition is a coating (paint, primer, lacquer or varnish), an ink or an adhesive.

11. A composition comprising an aqueous solution of 15-70 wt.% of a carboxylated carbohydrate having a molecular weight of a least 100,000 D and having a degree of carboxyl substitution of at least 5%.

12. A composition according to claim 11, wherein the carbohydrate has a degree of carboxyl substitution between 10 and 70% and a degree of aldehyde substitution between 0.5 and 20%.

13. A composition according to claim 11 or 12, wherein the aqueous solution contains 20-50 wt.% of the modified carbohydrate.

14. A composition according to any one of claims 11-13, further comprising a cross-linking agent.
